# DEMANDE DE BREVET EUROPEEN

(11) **EP 4 393 718 A1**
(43) Date de publication de la demande: **03.07.2024**
(21) Numéro de dépôt: 23206268.7
(22) Date de dépôt: 02.11.2023
(51) Int. Cl.: B41J 25/00, B41J 3/407, B41J 25/308, B05B 13/04

(54) **DISPOSITIF D'IMPRESSION À JET D'ENCRE, COMPRENANT AU MOINS DEUX BOUCLES D'ASSERVISSEMENT, ADAPTÉ AUX GRANDES SURFACES COMPLEXES**

(30) Priorité: 26.12.2022 FR 2214499
(71) Demandeur: AIRBUS OPERATIONS (S.A.S.), 31060 Toulouse (FR); Airbus SAS, 31700 Blagnac Cedex (FR); Airbus Operations GmbH, 21129 Hamburg (DE)
(72) Inventeur: MORINIERE, Boris, 31060 TOULOUSE (FR); BURGY, Olivier, 31060 TOULOUSE (FR); LELEU, Samuel, 31060 TOULOUSE (FR); MAHLER, Fabian, 82024 TAUFKIRCHEN (DE)
(74) Mandataire: Fantin, Laurent

(57) **Abrégé**

L'invention a pour objet un dispositif d'impression à jet d'encre comportant :
- un robot articulé (62) présentant une extrémité libre,
- un module d'impression (68) comprenant une première partie (82) reliée à l'extrémité libre du robot articulé (62) ainsi qu'une deuxième partie (84) mobile par rapport à la première partie (82) et supportant au moins une tête d'impression (56),
- une première boucle d'asservissement (76) configurée pour contrôler le robot articulé (62),
- une deuxième boucle d'asservissement (92) configurée pour corriger, si nécessaire, la position de la deuxième partie (84) par rapport à la première partie (82), qui présente une fréquence de correction au moins cinq fois supérieure à celle de la première boucle d'asservissement.

Cette solution permet d'obtenir un dispositif d'impression à jet d'encre adapté aux surfaces complexes de grandes dimensions, très réactif et offrant une qualité d'impression élevée.

## Description

La présente demande se rapporte à un dispositif d'impression à jet d'encre, comprenant au moins deux boucles d'asservissement, adapté aux grandes surfaces complexes. Ce dispositif est plus particulièrement adapté pour la décoration des surfaces extérieures d'un aéronef. Pour la présente demande, une surface extérieure d'un aéronef correspond à la surface extérieure du fuselage, de la voilure et/ou de l'empennage de l'aéronef.

Selon une technique connue, une surface extérieure d'un aéronef est recouverte d'un revêtement appliqué par pulvérisation, par exemple à l'aide de pistolets à peinture qui génèrent un brouillard de peinture (Overspray en anglais). Lorsque le revêtement comprend des marquages et/ou des motifs décoratifs, il est nécessaire d'utiliser des éléments de masquage pour recouvrir les zones à ne pas peindre afin de produire des contours propres. Cette étape de mise en place des éléments de masquage est longue et fastidieuse. Cette étape est d'autant plus longue et fastidieuse qu'elle doit être répétée plusieurs fois si les marquages et/ou les motifs décoratifs comprennent plusieurs couleurs.

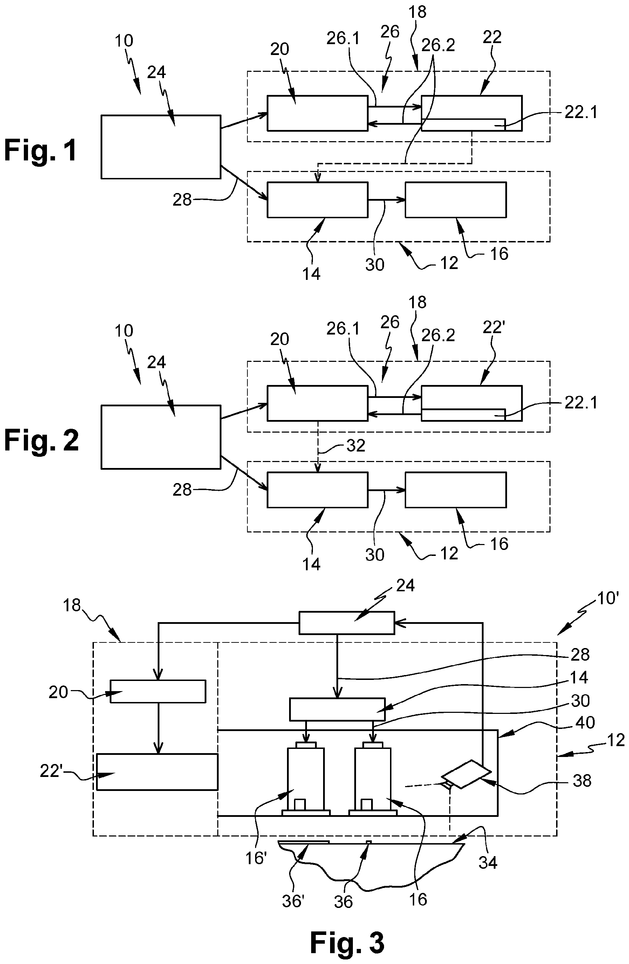

Un dispositif d'impression à jet d'encre permet de déposer à la demande des gouttes d'un fluide, point par point, sur une surface. Selon un mode de réalisation visible sur la figure 1, un tel dispositif d'impression 10 comprend un système d'impression 12 comportant une commande d'impression 14 et au moins une tête d'impression 16, un système de déplacement 18 comportant une commande de déplacement 20 et un robot cartésien 22 ainsi qu'une unité de commande 24 configurée pour piloter les systèmes d'impression et de déplacement 12, 18.

Le robot cartésien 22 est configuré pour déplacer la tête d'impression 16 selon trois directions orthogonales. Il comprend plusieurs actionneurs ainsi que, pour chaque actionneur, un encodeur 22.1 configuré pour déterminer le mouvement réel de l'actionneur associé.

Le système de déplacement 18 est configuré pour déplacer la tête d'impression 16 selon des trajectoires rectilignes et parallèles entre elles. Le système de déplacement 18 comprend une boucle d'asservissement 26 entre les actionneurs du robot cartésien 22 et la commande de déplacement 20. Ainsi, la commande de déplacement 20 transmet aux actionneurs du robot cartésien 22 des consignes de déplacement 26.1 en fonction des mouvements théoriques à réaliser. En retour, chaque encodeur 22.1 transmet aux commandes d'impression et de déplacement 14, 20 des données de déplacement 26.2 en fonction des mouvements réels réalisés par les actionneurs du robot cartésien 22. La commande de déplacement 20 est configurée pour corriger les consignes de déplacement 26.1 transmises aux actionneurs du robot cartésien 22 en fonction des données de déplacement 26.2 reçues afin que les mouvements réels réalisés par les actionneurs du robot cartésien 22 soient les plus proches possible des mouvements théoriques.

En complément, l'unité de commande 24 transmet à la commande d'impression 14 des données d'image 28 relatives à l'image à imprimer. En fonction des données d'image 28 et de déplacement 26.2 reçues, la commande d'impression 14 transmet à la tête d'impression 16 des instructions 30 de dépôt des gouttes d'encre par la tête d'impression 16 à des instants donnés en fonction de la position de la tête d'impression 16.

Un tel dispositif d'impression comportant un robot cartésien permet d'obtenir une précision d'impression élevée. Cependant, son utilisation est limitée aux surfaces planes de petites dimensions. Il n'est pas adapté pour une surface de grandes dimensions complexes comme la surface extérieure d'un aéronef. Pour la présente demande, on entend par surface complexe une surface non plane présentant au moins un rayon de courbure.

Pour pouvoir déplacer la tête d'impression 16 au-dessus d'une surface complexe de grandes dimensions comme illustré sur la figure 2, le système de déplacement 18 comprend, à la place du robot cartésien 22, un robot articulé 22' qui présente un bâti fixe ainsi qu'une extrémité mobile par rapport au bâti selon six axes de rotation et supportant au moins une tête d'impression 16. Dans le cas d'un robot articulé 22', les données de déplacement 26.2 des encodeurs 22.1 ne sont pas directement transmises à la commande d'impression 14. La commande de déplacement 20 est configurée pour déterminer, à partir des données de déplacement 26.2 de chaque encodeur 22.1, la trajectoire de l'extrémité du robot articulé 22' et transmettre à la commande d'impression 14 des données de trajectoire 32 en fonction de la trajectoire déterminée de l'extrémité du robot articulé 22'. En fonction des données d'image et de trajectoire 28, 32 reçues, la commande d'impression 14 transmet à la tête d'impression 16 des instructions 30 de dépôt des gouttes d'encre par la tête d'impression 16 à des instants donnés en fonction de la position de la tête d'impression 16.

La trajectoire de l'extrémité d'un robot articulé 22' présente une précision de l'ordre de +/-0,5 mm qui n'est pas suffisante pour la décoration d'une surface extérieure d'un aéronef nécessitant une précision beaucoup plus élevée, de l'ordre du centième de millimètre.

Le document US9527275 propose une solution visant à améliorer la précision de l'impression. Selon un mode de réalisation décrit dans ce document et illustré sur la figure 3, un dispositif d'impression 10' comprend :
- un système d'impression 12 comportant une commande d'impression 14 ainsi que des première et deuxième têtes d'impression 16, 16',
- un système de déplacement 18 comportant une commande de déplacement 20 et un robot articulé 22',
- un capteur d'images 38,
- une unité de commande 24 configurée pour piloter les systèmes d'impression et de
déplacement 12, 18 en fonction des images acquises par le capteur d'images 38.

La première tête d'impression 16 est configurée pour déposer sur la surface 34 à imprimer des marques 36 selon une première trajectoire. En parallèle, la deuxième tête d'impression 16' est configurée pour déposer sur la surface 34 une bande de revêtement 36' correspondant à une bande de l'image à reproduire en suivant une deuxième trajectoire. Le capteur d'images 38 est configuré pour capter des images de la surface 34, notamment d'une zone de la surface 34 sur laquelle sont apposées les marques 36. Selon une autre configuration, les première et deuxième têtes d'impression sont configurées pour imprimer des bandes de revêtement correspondant à des bandes de l'image.

Selon ce mode de réalisation, les première et deuxième têtes d'impression 16, 16' ainsi que le capteur d'images 38 sont solidaires d'une platine 40 fixée à l'extrémité du robot articulé 22' et immobiles par rapport à cette platine 40. Ainsi, les première et deuxième trajectoires sont parfaitement parallèles. En fonctionnement, les marques 36 et la bande de revêtement 36' sont simultanément apposées sur la surface 34 en suivant les première et deuxième trajectoires parallèles. Lors de l'impression d'une nouvelle bande de revêtement 36', le capteur d'image 38 capte des images comportant les marques 36 simultanément apposées à la bande de revêtement précédemment déposée. A partir de ces images, l'unité de commande 24 est configurée pour déterminer, de manière précise, la première trajectoire suivie par la première tête d'impression 16 lors du précédent passage et transmettre des données de trajectoire à l'unité de déplacement 20 de manière à ce que l'extrémité du robot cartésien suive une trajectoire parallèle. Ainsi, la trajectoire de la deuxième tête d'impression 16' lors d'un passage donné est parallèle à la trajectoire de la première tête d'impression 16' lors du passage précédant le passage donné.

Même si le mode de réalisation décrit dans le document US9527275 permet d'améliorer la précision de l'impression, il ne permet pas d'atteindre un niveau de précision suffisant pour la qualité requise en matière de revêtement d'une surface extérieure d'aéronef, d'autant plus que la surface à recouvrir n'est pas parfaitement immobile dans le cas d'une surface extérieure d'un aéronef et peut légèrement osciller.

Le document US2020/0198367 propose un dispositif d'impression adapté pour peindre un fuselage d'aéronef. Ce dispositif comprend une plateforme mobile, un bras articulé supporté par la plateforme mobile, un premier support relié à l'extrémité du bras articulé, un deuxième support relié au premier support par au moins un actionneur ainsi qu'un module d'impression solidaire de ce deuxième support. En complément, le dispositif d'impression comprend un système de suivi de trajectoire configuré pour déterminer la position réelle de la plateforme mobile et du bras articulé ainsi que des capteurs locaux, solidaires du module d'impression, configurés pour déterminer la position du module d'impression par rapport à la surface à peindre.

Les données déterminées par le système de trajectoire et par les capteurs locaux sont fusionnées de manière à déterminer un premier jeu de valeurs correctrices pour piloter en temps réel la position du module d'impression, notamment sa position transversale (perpendiculaire à la trajectoire), ainsi qu'un deuxième jeu de valeurs correctrices pour piloter le moment d'éjection des gouttelettes d'encre par le module d'impression.

Le mode de réalisation décrit dans le document US2020/0198367 ne permet pas d'obtenir une précision satisfaisante.

Le document US2016/0355026 décrit un dispositif d'impression adapté pour peindre le fuselage d'un aéronef. Ce dispositif comprend un bras articulé, un premier support relié à l'extrémité du bras articulé, un deuxième support relié au premier support par plusieurs actionneurs ainsi qu'un module d'impression solidaire du deuxième support. En complément, le dispositif d'impression comprend des capteurs configurés pour déterminer la position réelle du module d'impression ainsi qu'un contrôleur configuré pour piloter le bras articulé et l'ensemble des actionneurs de manière à, si besoin, corriger la position du module d'impression en comparant la position réelle déterminée par les capteurs et la position correspondante d'une trajectoire prédéfinie.

Comme précédemment, le mode de réalisation décrit dans le document US2016/0355026 ne permet pas d'obtenir une précision satisfaisante.

La présente invention vise à remédier à tout ou partie des inconvénients de l'art antérieur. A cet effet, l'invention a pour objet un dispositif d'impression à jet d'encre permettant d'appliquer un revêtement sur une surface en se déplaçant parallèlement à une direction de déplacement, la surface comportant une direction normale sensiblement perpendiculaire à la surface en un point donné de ladite surface, le dispositif d'impression à jet d'encre comportant :
- un robot articulé) qui présente une extrémité libre,
- un module d'impression qui comprend :
   ∘ une première partie reliée à l'extrémité libre du robot articulé,
   ∘ une deuxième partie, mobile par rapport à la première partie, supportant au moins une tête d'impression à jet d'encre et occupant une position donnée à un instant donné par rapport à la première partie,
   ∘ au moins un actionneur configuré pour déplacer la deuxième partie par rapport à la première partie,
- une première boucle d'asservissement configurée pour contrôler le robot articulé et corriger, si nécessaire, avec une première fréquence de correction donnée, la position du module d'impression,
- une deuxième boucle d'asservissement configurée pour contrôler l'actionneur et corriger, si nécessaire, la position de la deuxième partie du module d'impression par rapport à la première partie.

Selon l'invention, la deuxième boucle d'asservissement présente une deuxième fréquence de correction au moins cinq fois supérieure à la première fréquence de correction.

Le fait de prévoir une deuxième boucle d'asservissement imbriquée dans la première boucle d'asservissement qui présente une fréquence de correction au moins cinq fois supérieure à celle de la première boucle d'asservissement permet d'obtenir la précision d'impression requise avec un bras robotisé du commerce et une première boucle d'asservissement du bras robotisé connue.

Selon une autre caractéristique, chaque actionneur configuré pour déplacer la deuxième partie par rapport à la première partie présente une fréquence de changement de position supérieure à 10Hz et au moins cinq fois supérieure à celle du bras robotisé.

Selon une autre caractéristique, le module d'impression comprend au moins une articulation, reliant les première et deuxième parties du module d'impression, configurée pour permettre à la deuxième partie de se déplacer par rapport à la première partie selon au moins un mouvement parmi un mouvement de translation parallèle à une direction transversale perpendiculaire à la direction de déplacement et à la direction normale, un mouvement de rotation autour d'un axe de rotation parallèle à la direction normale et un mouvement de translation parallèle à la direction normale. En complément, le module d'impression comprend deux actionneurs reliant les première et deuxième parties, décalés l'un par rapport à l'autre selon la direction de déplacement, chacun des deux actionneurs se déformant selon la direction transversale et étant configuré pour déplacer la deuxième partie par rapport à la première partie selon la direction transversale.

Selon une autre caractéristique, chaque actionneur est choisi parmi un actionneur piézoélectrique et un actionneur électromagnétique.

Selon une autre caractéristique, la deuxième boucle d'asservissement comprend au moins un capteur configuré pour capter des données relatives à la surface sur laquelle est appliqué le revêtement ainsi qu'une unité de traitement configurée pour comparer, à partir des données transmises par ledit au moins un capteur, la position réelle à un instant donné de la deuxième partie) du module d'impression et une position souhaitée à cet instant donné afin de déterminer s'il existe un écart et, s'il existe un écart supérieur à un seuil donné, piloter ledit au moins un actionneur entre la première partie et la deuxième partie afin de modifier la position de la deuxième partie par rapport à la première partie.

Selon une autre caractéristique, la deuxième boucle d'asservissement comprend un premier capteur positionné à l'avant de ladite au moins une tête d'impression ainsi qu'un deuxième capteur positionné à l'arrière de ladite au moins une tête d'impression.

Selon une autre caractéristique, les premier et deuxième capteur sont décalés l'un par rapport à l'autre selon une direction transversale perpendiculaire à la direction de déplacement et à la direction normale.

Selon une autre caractéristique, l'unité de traitement est configurée pour déterminer, si un écart supérieur à un seuil donné est constaté, au moins une correction parmi un mouvement de translation parallèle à la direction transversale et un mouvement de rotation autour d'un axe de rotation parallèle à la direction normale.

Selon une autre caractéristique, chaque capteur est un capteur d'images « par contact » positionné de manière à visualiser la surface.

Selon une autre caractéristique, la deuxième boucle d'asservissement est configurée pour corriger un positionnement de la deuxième partie par rapport à la première partie avec une latence inférieure à 100 ms.

Selon une autre caractéristique, la deuxième boucle d'asservissement comprend au moins un capteur de distance mesurant une distance entre la deuxième partie du module d'impression et la surface afin de piloter ledit au moins un actionneur entre la première partie et la deuxième partie du module d'impression de manière à maintenir cette distance proche d'une distance prédéfinie.

L'invention a également pour objet un procédé de réalisation d'un revêtement sur une surface en appliquant tour à tour plusieurs bandes de revêtement parallèles entre elles et juxtaposées les unes aux autres en utilisant un dispositif d'impression à jet d'encre selon l'une des caractéristiques précédentes, chaque bande de revêtement comprenant un premier bord et un deuxième bord sensiblement parallèles entre eux ainsi que des repères pour guider le dispositif d'impression à jet d'encre positionnés le long du premier bord, les deuxièmes bords de chaque bande de revêtement comportant des extensions configurées pour masquer les repères de la bande de revêtement adjacente précédemment appliquée.

Selon une autre caractéristique, chaque repère comprend des zones imprimées et des zones non imprimées. En complément, chaque extension comprend des zones imprimées au droit des zones non imprimées du repère à masquer et des zones non imprimées au droit des zones imprimées du repère à masquer.

Selon une autre caractéristique, chaque extension est configurée pour totalement recouvrir un repère.

D'autres caractéristiques et avantages ressortiront de la description de l'invention qui va suivre, description donnée à titre d'exemple uniquement, en regard des dessins annexés parmi lesquels :
- La figure 1 est une représentation schématique d'un dispositif d'impression illustrant un premier mode de réalisation de l'art antérieur,
- La figure 2 est une représentation schématique d'un dispositif d'impression illustrant un deuxième mode de réalisation de l'art antérieur,
- La figure 3 est une représentation schématique d'un dispositif d'impression illustrant un troisième mode de réalisation de l'art antérieur,
- La figure 4 est une représentation schématique d'un dispositif d'impression illustrant un premier mode de réalisation de l'invention,
- La figure 5 est une représentation schématique d'un dispositif d'impression illustrant un deuxième mode de réalisation de l'invention,
- La figure 6 est une vue de face d'un module d'impression illustrant un mode de réalisation de l'invention,
- La figure 7 est une vue de dessus d'un module d'impression illustrant un mode de réalisation de l'invention en fonctionnement,
- La figure 8 est une représentation schématique de première et deuxième boucles d'asservissement illustrant un mode de réalisation de l'invention.

Selon un mode de réalisation, un dispositif d'impression 50 comprend un système d'impression 52 comportant une commande d'impression 54 et au moins une tête d'impression 56, un système de déplacement 58 comportant une commande de déplacement 60 et un robot articulé 62 ainsi qu'une unité de commande 64 configurée pour piloter les systèmes d'impression et de déplacement 52, 58. Par robot articulé, on entend également un robot polyarticulé.

L'unité de commande 64 et le système de déplacement 58 peuvent former un unique élément ou deux éléments distincts.

Le dispositif d'impression 50 est configuré pour recouvrir, au moins en partie, une surface S d'un revêtement Rev comportant au moins une couche. Le revêtement Rev comprend, au niveau de chaque couche, une multitude de points juxtaposés les uns aux autres qui peuvent être de la même couleur ou de couleurs différentes. La surface S peut être une surface complexe et atteindre plusieurs dizaines de mètres. Selon une application, la surface S est une surface extérieure d'un aéronef.

Quelle que soit l'application, la surface S présente une géométrie donnée et, en un point donné, une direction normale Z perpendiculaire à la surface S ainsi que des directions X et Y perpendiculaires à la première direction Z et perpendiculaires entre elles.

La tête d'impression 56 est configurée pour apposer point par point le revêtement Rev sur la surface S. Selon une configuration, le dispositif d'impression est un dispositif d'impression à jet d'encre et chaque tête d'impression 56 est une tête d'impression à jet d'encre

La commande d'impression 54 est configurée pour transmettre à chaque tête d'impression 56 au moins une instruction 66 de dépôt d'au moins un point du revêtement (une goutte d'encre dans le cas d'une tête d'impression 56 à jet d'encre) à un instant donné.

Selon une configuration, le robot articulé 62 présente un bâti fixe par rapport à un référentiel donné R, une extrémité libre configurée pour supporter de manière démontable au moins un module d'impression 68 ainsi que différents segments, reliés entre eux par des articulations, reliant le bâti fixe et l'extrémité libre. Selon un agencement, le robot articulé 62 comprend six articulations comportant chacune un axe de rotation. Bien entendu, l'invention n'est pas limitée à cette configuration pour le robot articulé 62. Quel que soit le mode de réalisation, le robot articulé 62 est configuré en fonction des dimensions de la surface S sur laquelle est appliqué le revêtement Rev et de manière à suivre la géométrie de la surface S. Ainsi, le bras robotisé 62 présente une amplitude de déplacement suffisante pour couvrir une grande surface S. En contrepartie, il présente une précision de déplacement et une fréquence de changement de position (fréquence à laquelle la position de l'extrémité libre du bras robotisé 62 peut être changée), insuffisantes pour la précision recherchée en matière d'impression. L'unité de commande 64 est configurée pour transmettre au moins une consigne de déplacement 70 au système de déplacement 58 et plus particulièrement à sa commande de déplacement 60 afin que le robot articulé 62 déplace le module d'impression 68 au-dessus de la surface S selon une trajectoire souhaitée.

Le système de déplacement 58, la commande déplacement 60 et le robot articulé 62 ne sont pas plus décrits car ils peuvent être identiques à ceux de l'art antérieur.

En fonctionnement, le dispositif d'impression 50 applique le revêtement Rev en se déplaçant selon une direction de déplacement correspondant à la direction X, la direction Y correspondant à une direction transversale. Ainsi, chaque couche du revêtement Rev est constituée de plusieurs bandes de revêtement 74, 74', parallèles entre elles et juxtaposées les unes aux autres, appliquées tour à tour à l'aide du dispositif d'impression 50 à jet d'encre. Chaque bande de revêtement 74 présente une largeur (dimension prise selon la direction transversale Y) qui est fonction de la tête d'impression 56.

Selon un mode de réalisation, le dispositif d'impression 50 comprend une première boucle d'asservissement 76 comportant au moins un capteur d'images 78, solidaire du module d'impression 68, configuré pour capter des images de la surface S et les transmettre à l'unité de commande 64, l'unité de commande 64 étant configurée pour corriger, si nécessaire, la trajectoire du module d'impression 68 en fonction des images saisies par le capteur d'images 78.

A cet effet, la surface S comprend des repères 80 pour guider le dispositif d'impression 50 à jet d'encre. Par repère 80, on entend aussi bien un élément rapporté sur la surface S, comme une marque, qu'un élément remarquable de la surface S.

Selon une première configuration, les repères 80 sont des éléments remarquables présents sur la surface S avant l'application du revêtement Rev. Lorsque la surface S correspond à la surface extérieure d'un aéronef, les repères 80 peuvent correspondre aux têtes de rivets, aux hublots, aux lignes de jonction entre des panneaux de l'aéronef, à des cordons de mastic ou tout autre élément distinctif de la surface extérieure de l'aéronef. Selon cette configuration, chaque repère 80 présente des coordonnées théoriques dans le référentiel R donné.

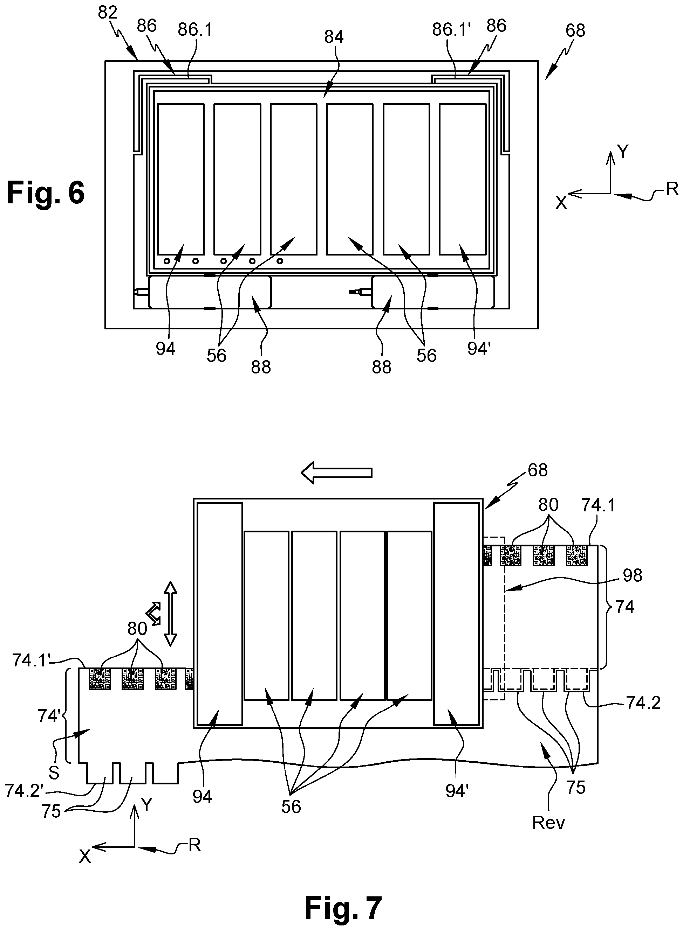

Selon une deuxième configuration, les repères 80 sont des marques apposées sur la surface S par le dispositif d'impression 50. Ces repères 80, sous forme de marques, peuvent être apposés en utilisant une encre seulement visible dans une portion limitée du spectre électromagnétique (comme par exemple une encre fluorescente quand elle est exposée à une lumière ultraviolette mais qui est sinon invisible), comme décrit dans le document US9527275. Comme illustré sur la figure 7, ces marques peuvent être incorporées dans la bande de revêtement 74' précédemment appliquée. Elles peuvent être avantageusement masquées lors de l'application de la bande de revêtement 74 suivante. Selon ce mode de réalisation, chaque bande de revêtement 74, 74' comprend un premier bord 74.1, 74.1' ainsi qu'un deuxième bord 74.2, 74.2' sensiblement parallèles entre eux. Les repères 80 sont positionnés le long du premier bord 74.1, 74.1'.

Selon une première configuration, les deuxièmes bords 74.2, 74.2' de chaque bande de revêtement 74, 74' comprennent des extensions 75, chacune configurée pour totalement recouvrir un repère 80 de la bande de revêtement 74, 74' adjacente précédemment appliquée afin de le masquer. Cette première configuration génère une surimpression et une surépaisseur au droit de chaque repère 80.

Selon une deuxième configuration, chaque repère 80 comprend des zones imprimées et des zones non imprimées. Dans ce cas, les deuxièmes bords 74.2, 74.2' de chaque bande de revêtement 74, 74' comprennent des extensions 75 comprenant des zones imprimées au droit des zones non imprimées du repère 80 à masquer et des zones non imprimées au droit des zones imprimées du repère 80 à masquer. Cette deuxième configuration permet de masquer les repères 80 sans générer de surépaisseurs.

Les repères 80 sont configurés pour maximiser leur visibilité par un capteur d'images tout en minimisant la perception de la présence de ces repères 80 une fois masqués, et ce malgré d'éventuels défauts lors de la surimpression. L'oeil humain percevant plus facilement les signaux structurés et répétitifs, les repères 80 sont avantageusement composés d'un motif pseudo-aléatoire permettant de rendre moins visibles les éventuels défauts lors de la surimpression.

Selon un mode de réalisation, chaque repère 80 comprend au moins un code ou un identifiant qui lui est propre. Ainsi, il est possible de différencier les repères 80 les uns des autres. Selon cette deuxième configuration, au moins une tête d'impression 56 du module d'impression 68 est configurée pour imprimer des repères 80 différents les uns des autres, qui comportent chacun au moins un code ou un identifiant permettant de les différencier.

L'unité de commande 64 est configurée pour analyser chaque image prise par le capteur d'images 78 afin de détecter chaque repère 80 présent dans l'image et transmettre, si nécessaire, des consignes de déplacement 70 corrigées afin d'adapter la trajectoire du module d'impression 68 en fonction des repères 80 détectés dans les images saisies par le capteur d'images 78.

Selon un mode opératoire, l'unité de commande 64 est configurée pour déterminer, à partir des repères 80 détectés dans les images saisies par le capteur d'images 78, une trajectoire précédente suivie par le module d'impression 68 lors de l'application de la bande de revêtement précédemment déposée et déterminer une trajectoire à suivre par le module d'impression 68 afin de déposer une nouvelle bande de revêtement en fonction de la trajectoire précédente.

Bien entendu, l'invention n'est pas limitée à ces modes opératoires pour le fonctionnement de la première boucle d'asservissement 76. Le mode opératoire décrit dans le document US9527275 pourrait être mis en oeuvre.

Selon une caractéristique, le module d'impression 68 comprend au moins des première et deuxième parties 82, 84, au moins une articulation 86 reliant les première et deuxième parties 82, 84 ainsi qu'au moins un actionneur 88 configuré pour déplacer la deuxième partie 84 par rapport à la première partie 82, la première partie 82 étant solidaire du robot articulé 62 et plus particulièrement de son extrémité libre, chaque tête d'impression 56 étant solidaire de la deuxième partie 84.

Selon une configuration visible sur la figure 6, la deuxième partie 84 du module d'impression 68 supporte quatre têtes d'impression 56. Bien entendu, l'invention n'est pas limitée à ce nombre de têtes d'impression. Quelle que soit la configuration, la deuxième partie 84 du module d'impression 68 supporte au moins une tête d'impression 56. En présence de plusieurs têtes d'impression, ces dernières suivent la même trajectoire.

L'articulation 86 est configurée pour permettre à la deuxième partie 84 de se déplacer par rapport à la première partie 82 selon au moins un mouvement parmi un mouvement de translation parallèle à la direction transversale Y, un mouvement de rotation autour d'un axe de rotation parallèle à la direction normale Z et un mouvement de translation parallèle à la direction normale Z. Selon une configuration, l'articulation 86 est configurée permettre à la deuxième partie 84 de se déplacer par rapport à la première partie 82 selon une combinaison de mouvements parmi un mouvement de translation parallèle à la direction transversale Y, un mouvement de rotation autour d'un axe de rotation parallèle à la direction normale Z et/ou un mouvement de translation parallèle à la direction normale Z.

Selon une configuration visible sur les figures 6 et 7, l'articulation 86 est configurée pour permettre à la deuxième partie 84 de se déplacer par rapport à la première partie 82 selon des mouvements parmi un mouvement de translation parallèle à la direction transversale Y et un mouvement de rotation autour d'un axe de rotation parallèle à la direction normale Z.

Selon un mode de réalisation, l'articulation 86 comprend au moins un élément déformable de manière élastique 86.1 reliant les première et deuxième parties 82, 84 du module d'impression 68, configuré pour se déformer au moins dans un plan perpendiculaire à la direction normale Z.

Selon une configuration, la deuxième partie 84 présente un pourtour rectangulaire et la première partie 82 se présente sous la forme d'un cadre, rectangulaire, entourant la deuxième partie 84. Le cadre formé par la première partie 82 comprend des côtés longitudinaux parallèles à la direction de déplacement X et des côtés transversaux parallèles à la direction transversale Y. Selon cette configuration, l'articulation 86 comprend deux éléments, déformables de manière élastique 86.1, 86.1', positionnés entre les première et deuxième parties 82, 84, aux extrémités d'un côté longitudinal du cadre formé par la première partie 82. Quel que soit le mode de réalisation, l'articulation 86 et notamment les éléments déformables de manière élastique 86.1, 86.1' sont configurés pour permettre à la deuxième partie 84 de se déplacer par rapport à la première partie 82 selon des mouvements comportant au moins un mouvement de translation parallèle à la direction transversale Y avec une amplitude d'au moins +/-0,50 mm et au moins un mouvement de rotation autour d'un axe de rotation parallèle à la direction normale Z avec une amplitude d'au moins +/- 0,5 °.

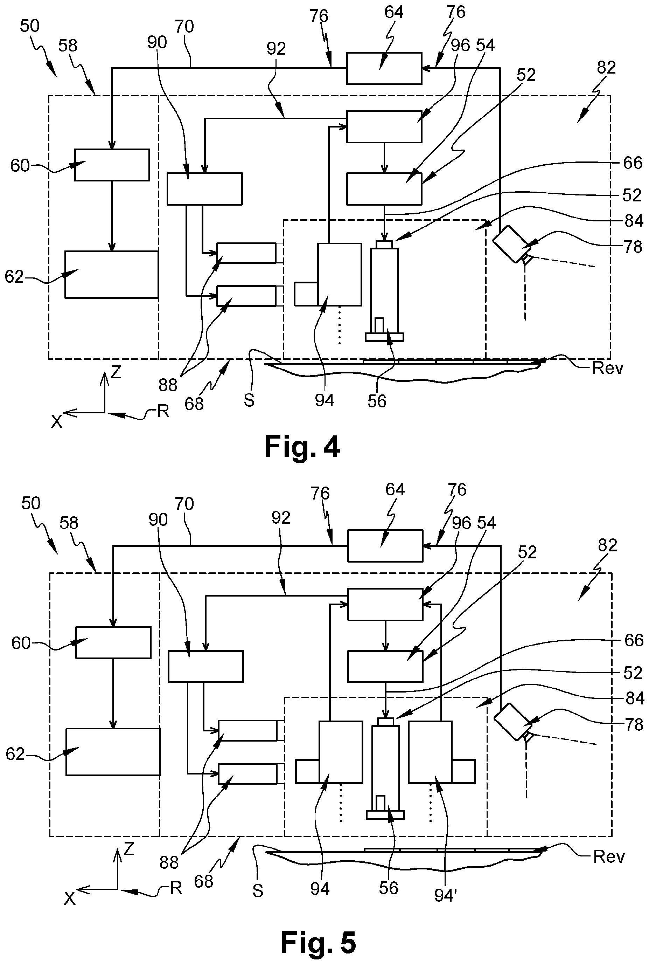

Selon une configuration visible sur la figure 5, chaque actionneur 88 est choisi parmi un actionneur piézoélectrique et un actionneur électromagnétique à bobine mobile. Bien entendu, l'invention n'est pas limitée à ces actionneurs 88. Ainsi, les actionneurs électromagnétiques à bobine mobile pourraient être remplacés par des actionneurs électromagnétiques à bobine fixe. Quel que soit le mode de réalisation, chaque actionneur 88 du module d'impression 68 est du type à faible amplitude, de préférence inférieure à 5 mm, mais à grande réactivité. Chacun d'eux est configuré pour permettre un déplacement de la deuxième partie 84 par rapport à la première partie 82 avec une fréquence de changement de position comprise entre 10 et 50 Hz, de préférence avec une fréquence de changement de position élevée supérieure à 10 Hz, de l'ordre de 30 à 50 Hz, sur une faible course.

Selon une configuration, le module d'impression 68 comprend deux actionneurs 88, 88', reliant les première et deuxième parties 82, 84 et positionnés entre elles, décalés l'un par rapport à l'autre selon la direction de déplacement X. Selon un agencement visible sur la figure 6, les actionneurs 88, 88' sont positionnés au niveau d'un premier côté longitudinal du cadre formé par la première partie 82 et les éléments déformables de manière élastique 86.1, 86.1' sont positionnés au niveau d'un deuxième côté longitudinal opposé au premier côté longitudinal.

Chacun des deux actionneurs 88, 88' se déforme selon la direction transversale et est configuré pour déplacer la deuxième partie 84 par rapport à la première partie 82 selon la direction transversale Y sur une course de l'ordre de quelques millimètres, plus précisément sur une course de +/-0,5 mm par rapport à une position médiane.

Selon cette configuration, lorsque les deux actionneurs 88, 88' se déforment de la même manière dans le même sens, la deuxième partie 84 se translate parallèlement à la direction transversale Y par rapport à la première partie 82. Lorsque les deux actionneurs 88, 88' se déforment en sens contraire, la deuxième partie 84 pivote autour d'un axe de rotation parallèle à la direction normale Z par rapport à la première partie 82.

Bien entendu, l'invention n'est pas limitée à ce mode de réalisation comportant deux actionneurs 88, 88'. Ainsi, comme illustré sur la figure 4, le module d'impression 68 peut ne comprendre qu'un seul actionneur 88.

Le module d'impression 68 comprend un contrôleur 90 pour piloter en temps réel ledit au moins un actionneur 88, 88' du module d'impression 68.

Selon une autre caractéristique, le module d'impression 68 comprend une deuxième boucle d'asservissement 92 permettant de piloter en temps réel les mouvements de la deuxième partie 84 par rapport à la première partie 82.

Cette deuxième boucle d'asservissement 92 comprend au moins un capteur 94 configuré pour capter des données relatives à la surface S sur laquelle est appliqué le revêtement Rev ainsi qu'une unité de traitement 96 configurée pour comparer, à partir des données transmises par ledit au moins un capteur 94, la position réelle à un instant donné de la deuxième partie 84 du module d'impression 68 et une position souhaitée à cet instant donné afin de déterminer s'il existe un écart et, s'il existe un écart supérieur à un seuil donné, piloter ledit au moins un actionneur 88, 88' afin de modifier la trajectoire de la deuxième partie 84 ou sa position par rapport à la première partie 82 et, in fine, la position de ladite au moins une tête d'impression 56 par rapport à la surface S.

L'unité de traitement 96 de la deuxième boucle d'asservissement 92 est configurée pour déterminer, si un écart supérieur à un seuil donné est constaté, au moins une correction parmi un mouvement de translation parallèle à la direction transversale Y et un mouvement de rotation autour d'un axe de rotation parallèle à la direction normale Z.

En complément, si l'unité de traitement 96 détermine un écart dans le sens de la direction de déplacement et que cet écart est supérieur à un seuil donné, l'unité de traitement 96 est configurée pour accélérer ou ralentir la fréquence d'éjection des gouttes des têtes d'impression 56 afin de rattraper l'écart déterminé.

Selon un agencement visible sur la figure 5, la deuxième boucle d'asservissement 92 comprend un premier capteur 94 positionné à l'avant de ladite au moins une tête d'impression 56 et un deuxième capteur 94' positionné à l'arrière de ladite au moins une tête d'impression, les termes avant et arrière faisant référence au sens de déplacement du module d'impression 68.

Selon un mode de réalisation, les premier et deuxième capteurs 94, 94' sont solidaires d'au moins une partie parmi les première et deuxième parties 82, 84 du module d'impression 68. Selon une configuration, chaque capteur 94, 94' est un capteur d'images « par contact » (Contact Image Sensor en anglais) positionné de manière à visualiser la surface S. En variante, chaque capteur 94, 94' est un capteur d'images à balayage linéaire (« line scan caméra » en anglais) avec une lentille/optique télécentrique positionnée de manière à visualiser la surface ou un capteur d'images large champ comme une caméra matricielle par exemple.

Bien entendu, l'invention n'est pas limitée à ce type de capteurs ou à ce nombre de capteurs 94, 94'. Comme illustré sur la figure 4, le module d'impression 68 peut comprendre un unique capteur 94. De plus, au moins un capteur de déplacement de type LVDT ou capacitif peut être prévu au niveau de chaque actionneur 88, 88' pour déterminer le déplacement réel provoqué par l'actionneur 88, 88'.

Selon un agencement, les premier et deuxième capteurs 94, 94' sont décalés l'un par rapport à l'autre selon la direction transversale Y. En présence de repères 80 au niveau de chaque bande de revêtement 74, le premier capteur 94 positionné à l'avant est configuré pour visualiser les repères 80 positionnés au niveau de la bande de revêtement 74' précédemment appliquée et le deuxième capteur 94' positionné à l'arrière est configuré pour visualiser la qualité de la bande de revêtement 74 juste appliquée et notamment la qualité de la surimpression qui vient d'être appliquée par le module d'impression 68 sur la bande de revêtement 74' précédemment appliquée. La qualité de la surimpression est notamment appréciée au niveau des repères 80 positionnés au niveau des bandes de revêtement 74. Selon un mode de fonctionnement, le deuxième capteur 94' positionné à l'arrière de ladite au moins une tête d'impression 56 est utilisé pour observer l'entièreté de la largeur de la bande de revêtement 74 venant d'être appliquée par le module d'impression 68 afin de contrôler en temps réel les potentiels défauts d'impression (des points manquants à cause d'une buse bouchée, une taille de points non-conforme, une imprécision des couleurs etc...). Ainsi, ce mode de fonctionnement permet de détecter un éventuel défaut avant une étape de cuisson, de durcissement, de séchage ou de polymérisation de la bande de revêtement 74. Ces défauts d'impression détectés grâce aux images du deuxième capteur 94' de la deuxième boucle d'asservissement 92 sont au moins partiellement corrigés en temps réel en modifiant les paramètres d'impression de la tête d'impression 56 à jet d'encre.

Selon un mode de réalisation visible sur la figure 7, le module d'impression 68 comprend, à l'arrière de la dernière tête d'impression 56 à jet d'encre, au moins un système de polymérisation 98 de la bande de revêtement 74 juste appliquée. Selon ce mode de réalisation, le deuxième capteur 94' est positionné entre la dernière tête d'impression 56 et le système de polymérisation 98.

Selon un agencement, les premier et deuxième capteurs 94, 94' sont séparés d'une distance selon la direction de déplacement X permettant d'optimiser la détection de potentielles erreurs en orientation autour de la direction normale Z de la deuxième partie 84 du module d'impression 68 par rapport à la surface S de manière à compenser cette erreur. Selon un mode opératoire, la compensation de l'erreur d'orientation autour de la direction normale Z est réalisée en pilotant au moins un actionneur 88, 88' entre la première partie 82 et la deuxième partie 84 du module d'impression 68 et/ou en transmettant au moins une consigne de déplacement 70 au système de déplacement 58 du robot articulé 62.

Selon un mode de réalisation, la deuxième boucle d'asservissement 92 comprend au moins un capteur de distance mesurant une distance entre la deuxième partie 84 du module d'impression 68 et la surface S afin de piloter ledit au moins un actionneur entre la première partie 82 et la deuxième partie 84 du module d'impression 68 de manière à maintenir cette distance proche d'une distance prédéfinie.

Selon une configuration, ledit au moins un capteur de distance est choisi parmi un capteur de mesure de distance à ultrason ou un capteur de mesure de distance optique (fonctionnant par exemple selon le principe de la triangulation laser ou de la mesure de temps de vol).

L'unité de traitement 96 comprend un algorithme configuré pour détecter, à partir des données transmises par ledit au moins un capteur 94, un écart selon au moins la direction transversale Y entre la position ou trajectoire de la deuxième partie 84 du module d'impression 68 supportant au moins une tête d'impression 56 et une position ou trajectoire souhaitée.

Selon un mode de réalisation, l'unité de traitement 96 est configurée pour détecter un écart selon au moins trois directions : la direction de déplacement X, la direction transversale Y et la direction normale Z.

Selon une configuration, l'unité de traitement 96 est une plate-forme de calcul embarquée composée d'un processeur à hautes performances accéléré par un GPU (Graphics Processing Unit en anglais). Ce type d'unité de traitement 96 permet d'obtenir un traitement d'images complexes rapide.

Selon une configuration, l'unité de traitement 96 est un réseau de portes programmables (Field Programmable Gate Arrays en anglais). Ce type d'unité de traitement 96 permet d'obtenir un traitement rapide et à très faible latence.

Lorsque le premier capteur 94 positionné à l'avant est configuré pour visualiser les repères 80 positionnés au niveau de la bande de revêtement 74' précédemment appliquée et que le deuxième capteur 94' positionné à l'arrière est configuré pour visualiser les repères 80 positionnés au niveau de la bande de revêtement 74 en cours d'application par le module d'impression 68, l'unité de traitement 96 est configurée pour déterminer, si un écart supérieur à un seuil donné est constaté, au moins une correction parmi un mouvement de translation parallèle à la direction transversale Y et un mouvement de rotation autour d'un axe de rotation parallèle à la direction normale Z.

L'unité de traitement 96 est configurée pour transmettre des consignes de déplacement au contrôleur 90 afin de modifier, si nécessaire, la position de la deuxième partie 84 par rapport à la première partie 82 ainsi que des instructions à la commande d'impression 54 pour déclencher, pour chaque tête d'impression, le dépôt de chaque point de revêtement déposé sur la surface S en fonction de la position de la tête d'impression 56.

Selon une configuration, l'unité de traitement 96 et l'unité de commande 64 forment un seul et même élément.

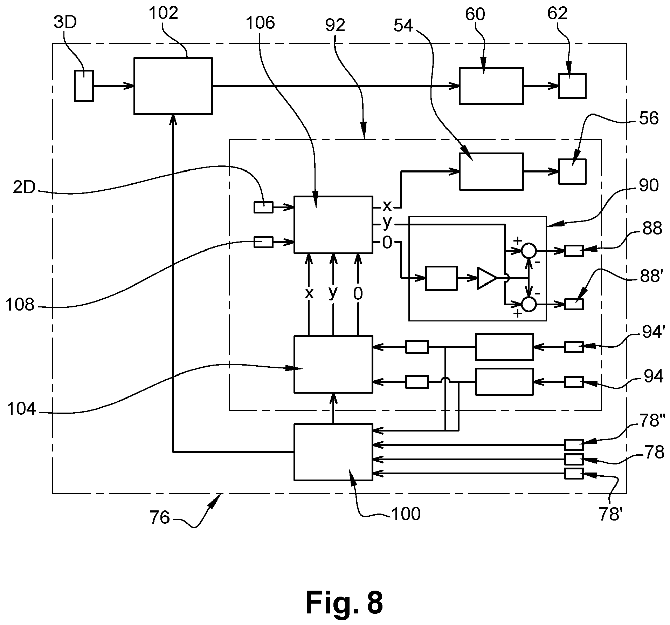

Selon un mode de fonctionnement visible sur la figure 8, la première boucle d'asservissement 76 comprend au moins un capteur 78, 78', 78" (parmi au moins une caméra 78, au moins un scanner linéaire 78' ou autres 78"), un premier système d'estimation de position 100 configuré pour estimer au moins une première valeur estimée de la position réelle du bras articulé 62 à partir des informations relevées par le (ou les) capteur(s) 78, 78', 78", au moins un premier régulateur 102 configuré pour déterminer au moins une première valeur correctrice à partir de la (ou des) première(s) valeur(s) estimée(s) par le premier système d'estimation de position 100 et d'une trajectoire théorique tridimensionnelle 3D que doit suivre le module d'impression 56 ainsi qu'une commande de déplacement 60 configurée pour piloter le bras robotisé 62 en fonction de la (ou des) première(s) valeur(s) correctrice(s).

Cette première boucle d'asservissement 76 permet d'obtenir une première correction de la position du module d'impression 56 en contrôlant le bras robotisé 62. Ce dernier est configuré pour réaliser des mouvements de grande amplitude avec une fréquence de changement de position donnée.

La deuxième boucle d'asservissement 92 comprend au moins un capteur 94, 94' (parmi des premier et deuxième capteurs d'images « par contact » (Contact Image Sensor en anglais) et/ou des premier et deuxième capteurs d'images à balayage linéaire ou autres), un deuxième système d'estimation de position 104 configuré pour estimer au moins une deuxième valeur estimée du module d'impression 68 à partir des informations relevées par le (ou les) capteur(s) 94, 94', au moins un deuxième régulateur 106 configuré pour déterminer au moins une deuxième valeur correctrice à partir de la (ou des) deuxième(s) valeur(s) estimée(s) par le deuxième système d'estimation de position 104 et de l'image à imprimer 108 ainsi qu'un contrôleur 90 configuré pour piloter en temps réel ledit au moins un actionneur 88, 88' du module d'impression 68 en fonction de la (ou des) valeur(s) correctrice(s).

Selon une configuration, les informations relevées par le (ou les) capteur(s) 94, 94' de la deuxième boucle 92 sont transmises au premier système d'estimation de position 100 de la première boucle d'asservissement 76 et utilisées par ce dernier pour corriger la position du bras articulé 62.

Selon une configuration, la (ou les) première(s) valeur(s) estimée(s) par le premier système d'estimation de position 100 de la première boucle 76 est (ou sont) transmise(s) au deuxième système d'estimation de position 104 de la deuxième boucle d'asservissement 92 et utilisée(s) par ce dernier pour déterminer la (ou les) deuxième(s) valeur(s) estimée(s).

Selon un mode opératoire, le deuxième système d'estimation de position 104 détermine une deuxième valeur estimée selon la direction de déplacement X, une deuxième valeur estimée selon la direction transversale Y ainsi qu'une deuxième valeur estimée angulaire autour de la direction normale Z. En complément, le deuxième régulateur 106 est configuré pour déterminer une deuxième valeur correctrice selon la direction de déplacement X transmise à la commande d'impression 54, une deuxième valeur correctrice selon la direction transversale Y et une deuxième valeur correctrice angulaire autour de la direction normale Z, ces deux dernières valeurs correctrices étant transmises au contrôleur 90 pour piloter les actionneurs 88, 88'.

Selon un mode de réalisation, le deuxième régulateur 106 est configuré pour déterminer au moins une deuxième valeur correctrice à partir de la (ou des) deuxième(s) valeur(s) estimée(s) par le deuxième système d'estimation de position 104, de l'image à imprimer 108 et d'une trajectoire théorique plane 2D qui correspond à la projection de la trajectoire théorique tridimensionnelle 3D sur la surface S à peindre.

Selon le mode de réalisation visible sur la figure 8, la deuxième boucle d'asservissement 92 estime la position des têtes d'impression 56 en considérant la position grossière du bras robotisé 62 et la position relative de l'impression précédemment imprimée en utilisant les capteurs 94, 94' pour aligner la nouvelle impression par rapport à l'impression précédemment imprimée. Le deuxième régulateur 106 est configuré pour maintenir la bonne position des têtes d'impression 56 en considérant la position estimée par le deuxième système d'estimation de position 104 et en comparant cette dernière à l'image à imprimer. La deuxième valeur correctrice déterminée par le deuxième système d'estimation de position 104 est transmise aux actionneurs 98, 98' pour corriger la position des têtes d'impression en rotation et translation selon la direction transversale Y. La position des têtes d'impression en translation selon la direction de déplacement X est corrigée en contrôlant la fréquence d'impression fournit à la commande d'impression 54 de la tête d'impression 56 qui va dilater ou contracter l'impression en fonction de l'avance/retard de la tête d'impression 56 par rapport à l'image imprimée.

Bien entendu, l'invention n'est pas limitée à ce mode de réalisation pour le dispositif d'impression 50. Quel que soit le mode de réalisation, ce dernier comprend :
- un robot articulé 62 présentant une extrémité libre mobile et une précision de déplacement et une fréquence de changement de position données,
- un module d'impression 68 comportant :
   ∘ une première partie 82 reliée à l'extrémité libre du robot articulé 62 et occupant une position donnée à un instant donné,
   ∘ une deuxième partie 84, mobile par rapport à la première partie 82, supportant au moins une tête d'impression 56 et occupant une position donnée à un instant donné par rapport à la première partie 82,
   ∘ au moins un actionneur 88, 88' pour déplacer la deuxième partie 84 par rapport à la première partie 82, chaque actionneur 88, 88' présentant une fréquence de changement de position, de préférence supérieure à 10 Hz, au moins cinq fois supérieure à la fréquence de changement de position du bras robotisé 62,
- une première boucle d'asservissement 76 configurée pour contrôler, avec une première fréquence de correction donnée, le robot articulé 62 et corriger en temps réel, si nécessaire, la trajectoire du robot articulé 62 et/ou la position du module d'impression, plus précisément de la première partie 82 du module d'impression 68,
- une deuxième boucle d'asservissement 92 configurée pour contrôler l'actionneur 88, 88' et corriger en temps réel, si nécessaire, la position de la deuxième partie 84 du module d'impression 68 par rapport à la première partie 82, la deuxième boucle d'asservissement 92 présentant une deuxième fréquence de correction au moins cinq fois supérieure, de préférence au mois dix fois supérieure, à la première fréquence de correction.

Le dispositif d'impression peut comprendre d'autres boucles d'asservissement au niveau du robot articulé 62.

La deuxième boucle d'asservissement 92 comprend un ensemble d'éléments parmi au moins un capteur 94, 94', au moins une unité de traitement 96, au moins un contrôleur 90, au moins un actionneur 88, 88' adaptés pour obtenir cette fréquence de correction.

En utilisant au moins deux boucles d'asservissement 76, 92 imbriquées l'une dans l'autre, présentant des fréquences de correction différentes, il est possible d'atteindre une précision requise pour une décoration apposée sur une surface extérieure d'un aéronef, la première boucle d'asservissement 76 présentant une fréquence de correction donnée, une large amplitude et une faible bande passante, la deuxième boucle d'asservissement 92 présentant une deuxième fréquence de correction au moins cinq fois supérieure à la première fréquence de correction, une faible amplitude et une large bande passante. Ainsi, il est possible d'obtenir la précision d'impression requise avec un bras robotisé du commerce et une première boucle d'asservissement du bras robotisé connue.

La première boucle d'asservissement 76 utilise les images d'au moins un capteur 94 d'images, notamment d'un capteur d'images à large champ (par exemple une caméra matricielle observant la surface défilant à l'avant du module d'impression 68) pour calculer au moins un écart entre la trajectoire nécessaire à la réalisation d'une impression de qualité et la trajectoire effectivement réalisée par le robot articulé 62 afin d'envoyer au moins une consigne de déplacement 70 à la commande de déplacement 60 du robot articulé 62 visant à réduire cet écart. Grâce à cette première boucle d'asservissement, les erreurs de positionnement sont réduites, pour passer de plusieurs millimètres à plusieurs dixièmes de millimètres.

La première boucle d'asservissement 76 est configurée pour détecter et reconnaître des repères 80 dans les images du capteur d'images afin d'estimer la position réelle du module d'impression 68 par rapport à la surface S.

Selon une autre caractéristique, la deuxième boucle d'asservissement 92 est configurée pour corriger un positionnement de la deuxième partie 84 par rapport à la première partie 82 avec une fréquence de correction supérieure à 10 Hz, de l'ordre de 30 à 50 Hz. La deuxième boucle d'asservissement 92 utilise au moins un capteur 94 d'images très réactif et au moins un actionneur 88, 88' à faible amplitude mais à grande réactivité afin de corriger de façon très réactive, avec une latence inférieure à 100 ms, le positionnement de la deuxième partie 84 par rapport à la première partie 82 du module d'impression 68 et ainsi compenser les éventuelles erreurs résiduelles laissées par la première boucle d'asservissement 76.

La deuxième boucle d'asservissement 92 est configurée pour détecter et reconnaître les repères 80 dans les images d'au moins un capteur 94, 94' d'images pour :
- estimer la position réelle de la deuxième partie 84 du module d'impression 68 par rapport à la surface S,
- déterminer une erreur de positionnement selon la direction transversale Y et à la direction normale Z, et
- piloter ledit au moins un actionneur 88, 88' entre la première partie 82 et la deuxième partie 84 du module d'impression 68 afin de réduire cette erreur.

Le fait de prévoir au moins deux boucles d'asservissement et plus particulièrement une deuxième boucle d'asservissement 92 entre deux parties 82, 84 du module d'impression supportant ladite au moins une tête d'impression permet d'obtenir un dispositif d'impression, adapté aux surfaces complexes de grandes dimensions, offrant une qualité d'impression élevée, très réactif et capable de s'adapter à d'éventuels mouvements oscillants, de l'ordre du Hertz, du robot articulé 62 ou de la surface S sur laquelle est apposé le revêtement Rev.

## Revendications

1. Dispositif d'impression à jet d'encre permettant d'appliquer un revêtement (Rev) sur une surface (S) en se déplaçant parallèlement à une direction de déplacement (X), la surface (S) comportant une direction normale (Z) sensiblement perpendiculaire à la surface (S) en un point donné de ladite surface (S), le dispositif d'impression à jet d'encre comportant :
- un robot articulé (62) qui présente une extrémité libre,
- un module d'impression (68) qui comprend :
∘ une première partie (82) reliée à l'extrémité libre du robot articulé (62),
∘ une deuxième partie (84), mobile par rapport à la première partie (82), supportant au moins une tête d'impression (56) à jet d'encre et occupant une position donnée à un instant donné par rapport à la première partie (82),
∘ au moins un actionneur (88, 88') configuré pour déplacer la deuxième partie (84) par rapport à la première partie (82),
- une première boucle d'asservissement (76) configurée pour contrôler le robot articulé (62) et corriger, si nécessaire, avec une première fréquence de correction donnée, la position du module d'impression (68),
- une deuxième boucle d'asservissement (92) configurée pour contrôler l'actionneur (88, 88') et corriger, si nécessaire, la position de la deuxième partie (84) du module d'impression (68) par rapport à la première partie (82) ;
**caractérisé en ce que** la deuxième boucle d'asservissement (92) présente une deuxième fréquence de correction au moins cinq fois supérieure à la première fréquence de correction.

2. Dispositif d'impression à jet d'encre selon la revendication 1, **caractérisé en ce que** le bras robotisé (62) présente une fréquence de changement de position donnée et **en ce que** chaque actionneur (88, 88') configuré pour déplacer la deuxième partie (84) par rapport à la première partie (82) présente une fréquence de changement de position supérieure à 10Hz et au moins cinq fois supérieure à la fréquence de changement de position du bras robotisé (62).

3. Dispositif d'impression à jet d'encre selon l'une des revendications précédentes, **caractérisé en ce que** module d'impression (68) comprend au moins une articulation (86), reliant les première et deuxième parties (82, 84) du module d'impression (68), configurée pour permettre à la deuxième partie (84) de se déplacer par rapport à la première partie (82) selon au moins un mouvement parmi un mouvement de translation parallèle à une direction transversale (Y) perpendiculaire à la direction de déplacement (X) et à la direction normale (Z), un mouvement de rotation autour d'un axe de rotation parallèle à la direction normale (Z) et un mouvement de translation parallèle à la direction normale (Z) et **en ce que** le module d'impression (68) comprend deux actionneurs (88, 88') reliant les première et deuxième parties (82, 84) et décalés l'un par rapport à l'autre selon la direction de déplacement (X), chacun des deux actionneurs (88, 88') se déformant selon la direction transversale (Y) et étant configuré pour déplacer la deuxième partie (84) par rapport à la première partie (82) selon la direction transversale (Y).

4. Dispositif d'impression à jet d'encre selon l'une des revendications 2 à 3, **caractérisé en ce que** chaque actionneur (88, 88') est choisi parmi un actionneur piézoélectrique et un actionneur électromagnétique.

5. Dispositif d'impression à jet d'encre selon l'une des revendications précédentes, **caractérisé en ce que** la deuxième boucle d'asservissement (92) comprend au moins un capteur (94) configuré pour capter des données relatives à la surface (S) sur laquelle est appliqué le revêtement (Rev) ainsi qu'une unité de traitement (96) configurée pour comparer, à partir des données transmises par ledit au moins un capteur (94), la position réelle à un instant donné de la deuxième partie (84) du module d'impression (68) et une position souhaitée à cet instant donné afin de déterminer s'il existe un écart et, s'il existe un écart supérieur à un seuil donné, piloter ledit au moins un actionneur (88, 88') entre la première partie (82) et la deuxième partie (84) afin de modifier la position de la deuxième partie (84) par rapport à la première partie (82).

6. Dispositif d'impression à jet d'encre selon la revendication précédente, **caractérisé en ce que** la deuxième boucle d'asservissement (92) comprend un premier capteur (94) positionné à l'avant de ladite au moins une tête d'impression (56) ainsi qu'un deuxième capteur (94') positionné à l'arrière de ladite au moins une tête d'impression (56).

7. Dispositif d'impression à jet d'encre selon la revendication précédente, **caractérisé en ce que** les premier et deuxième capteurs (94, 94') sont décalés l'un par rapport à l'autre selon une direction transversale (Y) perpendiculaire à la direction de déplacement (X) et à la direction normale (Z).

8. Dispositif d'impression à jet d'encre selon l'une des revendications 7 à 8, **caractérisé en ce que** l'unité de traitement (96) est configurée pour déterminer, si un écart supérieur à un seuil donné est constaté, au moins une correction parmi un mouvement de translation parallèle à la direction transversale (Y) et un mouvement de rotation autour d'un axe de rotation parallèle à la direction normale (Z).

9. Dispositif d'impression à jet d'encre selon l'une des revendications 5 à 8, **caractérisé en ce que** chaque capteur (94, 94') est un capteur d'images « par contact » positionné de manière à visualiser la surface (S).

10. Dispositif d'impression à jet d'encre selon l'une des revendications précédentes, **caractérisé en ce que** la deuxième boucle d'asservissement (92) est configurée pour corriger un positionnement de la deuxième partie (84) par rapport à la première partie (82) avec une latence inférieure à 100 ms.

11. Dispositif d'impression à jet d'encre selon l'une des revendications précédentes, **caractérisé en ce que** la deuxième boucle d'asservissement (92) comprend au moins un capteur de distance mesurant une distance entre la deuxième partie (84) du module d'impression (68) et la surface (S) afin de piloter ledit au moins un actionneur entre la première partie (82) et la deuxième partie (84) du module d'impression (68) de manière à maintenir cette distance proche d'une distance prédéfinie.

12. Procédé de réalisation d'un revêtement (Rev) sur une surface (S) en appliquant tour à tour plusieurs bandes de revêtement (74, 74') parallèles entre elles et juxtaposées les unes aux autres en utilisant un dispositif d'impression à jet d'encre selon l'une des revendications précédentes, chaque bande de revêtement (74, 74') comprenant un premier bord (74.1, 74.1') et, un deuxième bord (74.2, 74.2') sensiblement parallèles entre eux ainsi que des repères (80) pour guider le dispositif d'impression (50) à jet d'encre positionnés le long du premier bord (74.1, 74.1'), les deuxièmes bords (74.2, 74.2') de chaque bande de revêtement (74, 74') comportant des extensions (75) configurées pour masquer les repères (80) de la bande de revêtement (74, 74') adjacente précédemment appliquée.

13. Procédé de réalisation d'un revêtement (Rev) selon la revendication précédente, **caractérisé en ce que** chaque repère (80) comprend des zones imprimées et des zones non imprimées et **en ce que** chaque extension (75) comprend des zones imprimées au droit des zones non imprimées du repère (80) à masquer et des zones non imprimées au droit des zones imprimées du repère (80) à masquer.

14. Procédé de réalisation d'un revêtement (Rev) selon la revendication 13, **caractérisé en ce que** chaque extension (75) est configurée pour totalement recouvrir un repère (80).
